# EUROPEAN PATENT APPLICATION

(11) **EP 3 033 949 A1**
(43) Date of publication of application: **22.06.2016**
(21) Application number: 15198781.5
(22) Date of filing: 09.12.2015
(51) Int. Cl.: A23L 27/30, A23L 2/60

(54) **TRANSGLUCOSYLATED RUBUS SUAVISSIMUS EXTRACT AND METHODS OF PREPARATION AND USE**

(30) Priority: 16.12.2014 US 201414571723
(71) Applicant: International Flavors & Fragrances Inc., New York, NY 10019 (US)
(72) Inventor: WU, Hou, East Brunswick, NJ 08816 (US); JOHN, Thumpalasseril V., Morganville, NJ 07751 (US); KIM, Jung-A, Edgewater, NJ 07020 (US); CHIN, Hsi-Wen, Tinton Falls, NJ 07724 (US); LIU, Zhihua, East Brunswick, NJ 08816 (US)
(74) Representative: Lawrence, John

(57) **Abstract**

Transglucosylated *R*. *suavissimus* extract for enhancing the mouthfeel, in particular sugary mouthfeel, of a consumable is provided as is a consumable containing the transglucosylated *R*. *suavissimus* extract and further a method of producing the transglucosylated *R*. *suavissimus* extract.

## Description

### Status of Related Application

This application is a continuation-in-part of U.S. Serial No. 14/571,723, filed on December 17, 2014, the contents hereby incorporated by reference as if set forth in its entirety.

### Background

*Rubus suavissimus* S. Lee (*"R. suavissimus*") (Chinese sweet leaf) is a plant whose leaves are used to brew a sweetened tea. Consumer products such as beverages, teas, tooth paste, gum, deodorants or tablets containing the leaves or extract from *R. suavissimus* have been described (CN 102334576, CN 102228298, CN 102224902, CN 102150775, CN 102138887, CN 101990968, CN 101991051, CN 101919464, CN 101878839, CN 101878721, CN 101779718, CN 101669642, CN 101069533, CN 1757295, CN 1757293, CN 1742598, CN 1669458, CN 1582702, CN 1593174, CN 1561849, CN 1149419, JP 2010041949, JP 08317781, JP 2009190990, JP 2007290968, JP 2006187253, JP 2004166606, JP 2002193733, JP 2000041639, US 2008/0311252 and US 2005/0152997).

The sweet components of *R. suavissimus* have been isolated and rubusoside is identified as the major active component (Xu, et al. (1982) Chemistry and Industry of Forest Products 2(2):38-41; Tanaka, et al. (1981) Agric. Biol. Chem. 45:2165-2166). Enzymatic modification of rubusoside has also been described using fructofuranosidase, galactosyltransferase and glucosyltransferase. The resulting derivatives have been suggested for use as sweet modulators or enhancers (Ishikawa, et al. (1990) Agric. Biol. Chem. 54(12):3137-3143; JPH02238890; Darise, et al. (1984) Agric. Biol. Chem. 48(10):2483-2488; Ohtani, et al. (1991) Agric. Biol. Chem. 55(2):449-453).

### Summary of the Invention

It has now been found unexpectedly that a glucosylated rubusoside and a transglucosylated R. *suavissimus* extract enhance the mouthfeel of a consumable. Such enhancement is distinctly different and independent from the sweetness enhancement that is known previously. When used at certain levels, a glucosylated rubusoside and a transglucosylated *R. suavissimus* extract provide enhanced mouthfeel without causing significant increase of sweetness. A glucosylated rubusoside and a transglucosylated *R. suavissimus* extract are therefore particularly useful in enhancing the mouthfeel of a consumable.

This invention provides a method of enhancing the mouthfeel, in particular sugary mouthfeel, of a consumable including a carbohydrate sweetener or an artificial sweetener by adding an olfactory effective amount of a glucosylated rubusoside or a transglucosylated *R. suavissimus* extract containing an olfactory effective amount of a glucosylated rubusoside. *R. suavissimus* extract containing various concentrations of rubusoside are enzymatically transglucosylated to varying degrees to produce a transglucosylated *R. suavissimus* extract. This invention further provides a mouthfeel enhancing composition, wherein the composition comprises an olfactory effective amount of a glucosylated rubusoside or a transglucosylated *R. suavissimus* extract containing an olfactory effective amount of a glucosylated rubusoside.

Carbohydrate sweeteners of this invention include, for example, but are not limited to sucrose, fructose, glucose, high fructose corn syrup, xylose, arabinose or rhamnose, as well as sugar alcohol such as erythritol, xylitol, mannitol, sorbitol or inositol. Artificial sweeteners of this invention include, but are not limited to, aspartame, sucralose, neotame, acesulfame potassium, saccharin or a combination thereof. Consumables include, for example, a food product (*e.g.,* a beverage), a flavoring, a pharmaceutical composition, a dietary supplement, a nutraceutical, a dental hygienic composition, a tabletop sweetener or a cosmetic product. Flavorings particularly embraced by the present invention include Natural Sweet Flavor #2, stevioside, rebaudioside A, rebaudioside B, rebaudioside C, rebaudioside D, rebaudioside E, rebaudioside F, dulcoside A, dulcoside B, stevia, alpha-glucosyl stevia, fructosyl stevia, galactosyl stevia, beta-glucosyl stevia, siamenoside, mogrosidc IV, mogroside V, Luo Han Guo sweetener, monatin and its salts, glycyrrhizic acid and its salts, curculin, thaumatin, monellin, mabinlin, brazzein, hernandulcin, phyllodulcin, glycyphyllin, phloridzin, trilobtain, baiyunoside, osladin, polypodoside A, pterocaryoside A, pterocaryoside B, mukurozioside, phlomisoside I, periandrin I, abrusoside A, cyclocarioside I or a combination thereof.

### Detailed Description of the Invention

It has now been found that a glucosylated rubusoside as a pure chemical or as a constituent of a transglucosylated product of a botanical extract (for example, *R. suavissimus* extract) provides surprising enhanced mouthfeel, in particular sugary mouthfeel. Accordingly, the present invention provides methods of producing and using a glucosylated rubusoside or a transglucosylated *R. suavissimus* extract to enhance the mouthfeel of a consumable in various applications including beverages, savory, dairy and confectionary.

As used herein, a *R. suavissimus* extract is an alcohol, alcohol and water or water extract from the leaves of *R. suavissimus*. In certain embodiments, the *R. suavissimus* extract is enriched for rubusoside to achieve a content ranging from about 15% to about 95%. In particular embodiments, the *R. suavissimus* extract contains from about 50% to about 90% rubusoside, from about 60% to about 80% rubusoside or from about 70% to about 95% rubusoside. Preferably, *R. suavissimus* extract has a rubusoside content of about 70% or greater. Unless otherwise specified, percentages (% s) are by weight. *R. suavissimus* extract of use in this invention can be obtained from commercial sources such as those described herein.

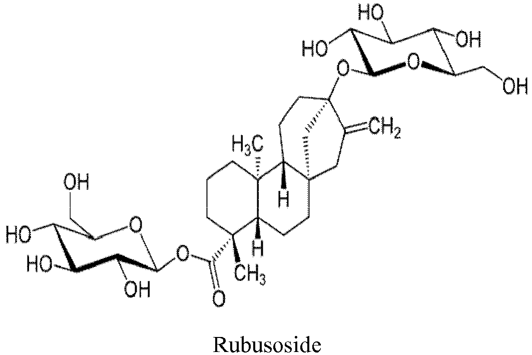

The transglucosylated *R. suavissimus* extract is produced by obtaining a *R. suavissimus* extract containing rubusoside and transglucosylating the rubusoside of the *R. suavissimus* extract to add glucose units, for example, one, two, three, four, five or more than five glucose units, to the rubusoside. Transglucosylation of the *R. suavissimus* extract can be carried out with any suitable enzyme including but not limited to, pullulanase and isomaltase, β-galactosidase, dextrine saccharase or cyclodextrin gluconotransferase with pullulan, maltose, lactose, partially hydrolyzed starch and maltodextrin being donors (Lobov, et al. (1991) Agric. Biol. Chem. 55:2959-2965; Kitahata, et al. (1989) Agric. Biol. Chem. 53:2923-2928; Yamamoto, et al. (1994) Biosci. Biotech. Biochem. 58:1657-1661; US 4,219,571). Once transglucosylation of the *R. suavissimus* extract is complete, the enzyme can be inactivated by, *e.g.,* heat treatment. The enzyme-inactivated reaction solution can be dried, *e.g*., by spray drying, to produce a solid product. In certain embodiments, the resulting solid transglucosylated *R. suavissimus* extract contains from about 10% to about 90% of rubusoside and glucosylated derivatives with the remainder being maltodextrin and non-active plant extract. Preferably, the enzyme-inactivated reaction solution is partially concentrated, *e.g*., by rotary evaporation, in the presence of a suitable carrier, *e.g*., glycerin or glycerol, to produce a concentrated fluid product with the remainder being carriers, diluents and non-active plant extract. The content of rubusoside and the glucosylated derivatives in a transglucosylated *R. suavissimus* extract product depends on the rubusoside content in the raw material, the rate of transglucosylation, the physical form of the product (dry or fluid) and the amount of carriers and diluents present in the extract.

In certain embodiment, from about 10% to about 90% of the rubusoside is transglucosylated. In yet another embodiment, from about 30% to about 80% of the rubusoside is transglucosylated. The glucosylated rubusoside or the transglucosylated *R. suavissimus* extract containing the glucosylated rubusoside is added to a consumable containing a carbohydrate sweetener or an artificial sweetener.

Mouthfeel involves the physical and chemical interaction of a consumable in the mouth. In the present invention, the term "mouthfeel" refers to the fullness sensation experienced in the mouth, which relates to the body and texture of a consumable. In the present invention, the mouthfeel of a consumable including a glucosylated rubusoside or a transglucosylated *R*. *suavissimus* extract is improved in relation to the mouthfeel of a comparative consumable that does not include a glucosylated rubusoside or a transglucosylated *R. suavissimus* extract. The term "sugary mouthfeel" refers to the fullness sensation experienced by an individual upon consumption of a sweetener such as a sugar. In particular embodiments of the present invention, a glucosylated rubusoside and a transglucosylated *R. suavissimus* extract enhance the sugary mouthfeel of a consumable. A glucosylated rubusoside and a transglucosylated *R*. *suavissimus* extract help to build the body and viscosity of a sweetener such as sugar to provide and intensify the mouthfeel of the sweetener. As used herein, the term "mouthfeel enhancing composition" refers to a composition capable of enhancing or intensifying the mouthfeel of a sweetener in a consumable.

As used herein, a consumable includes all food products, dietary supplements, nutraceuticals, pharmaceutical compositions, dental hygienic compositions and cosmetic products. In some embodiments, the consumable includes one or more artificial sweeteners including, but not limited to, aspartame, sucralose, neotame, acesulfame potassium or saccharin. In other embodiments, the consumable includes one or more carbohydrate sweeteners. The carbohydrate sweetener can be present in the consumable inherently (*e.g*., in food products containing fruits) or the carbohydrate sweetener is added into the consumable. Suitable carbohydrate sweeteners of the present invention include, but are not limited to, sucrose, fructose, glucose, high fructose corn syrup (containing fructose and glucose), xylose, arabinose, rhamnose and sugar alcohols, such as erythritol, xylitol, mannitol, sorbitol or inositol. In one embodiment, the carbohydrate sweetener is sucrose, fructose, glucose, high fructose corn syrup, xylose, arabinose or rhamnose, preferably sucrose, fructose or glucose. In one aspect of this embodiment, the carbohydrate sweetener is sucrose. In another aspect of this embodiment, the carbohydrate sweetener is glucose. In another aspect of this embodiment, the carbohydrate sweetener is fructose. In another embodiment, the carbohydrate sweetener is a sugar alcohol, *e.g*., erythritol, xylitol, mannitol, sorbitol or inositol.

In a consumable or a mouthfeel enhancing composition, an olfactory effective amount of a glucosylated rubusoside or a transglucosylated *R. suavissimus* extract containing an olfactory effective amount of a glucosylated rubusoside is used to enhance the mouthfeel, in particular, sugary mouthfeel, of a carbohydrate sweetener or an artificial sweetener without exhibiting any off-taste. The term "olfactory effective amount" refers to the amount of a glucosylated rubusoside or the amount of a glucosylated rubusoside in a transglucosylated *R. suavissimus* extract in a consumable or a mouthfeel enhancing composition, wherein the glucosylated rubusoside will provide mouthfeel enhancement. Any amount of the glucosylated rubusoside that provides the desired degree of mouthfeel enhancement can be used, which is determined by the content of the glucosylated rubusoside present. The term "ppb" as used herein refers to part per billion by weight and "ppm" refers to part per million by weight.

In certain embodiments, the olfactory effective amount is from about 10 ppb to about 750 ppm, preferably from about 100 ppb to about 300 ppm and more preferably from about 1 to about 150 ppm by weight of the consumable or by weight of the mouthfeel enhancing composition. In certain embodiments, a glucosylated rubusoside contains 3 or more glucose units. In preferred embodiments, a glucosylated rubusoside contains 3 to 8 glucose units. In more preferred embodiments, a glucosylated rubusoside contains 3, 4, 5 or a mixture of 3, 4 and 5 glucose units. In even more preferred embodiments, a glucosylated rubusoside contains a mixture of 3, 4 and 5 glucose units. In certain embodiments, the olfactory effective amount refers to the amount of a glucosylated rubusoside containing 3 or more glucose units. In preferred embodiments, the olfactory effective amount refers to the amount of a glucosylated rubusoside containing 3 to 8 glucose units. In more preferred embodiments, the olfactory effective amount refers to the amount of a glucosylated rubusoside containing 3, 4, 5 or a mixture of 3, 4 and 5 glucose units. In even more preferred embodiments, the olfactory effective amount refers to the amount of a glucosylated rubusoside containing a mixture of 3, 4 and 5 glucose units, wherein a glucosylated rubusoside containing 3 glucose units is present at a level of equal to or greater than about 20% by weight of the mixture.

The term "food product" as used herein includes, but is not limited to, fruits, vegetables, juices, meat products such as ham, bacon and sausage; egg products, fruit concentrates, gelatins and gelatin-like products such as jams, jellies, preserves and the like; milk products such as ice cream, sour cream and sherbet; icings, syrups including molasses; corn, wheat, rye, soybean, oat, rice and barley products, nut meats and nut products, cakes, cookies, confectionaries such as candies, gums, fruit flavored drops and chocolates, chewing gum, mints, creams, icing, ice cream, pies and breads, beverages such as coffee, tea, carbonated soft drinks, such as COKE^{®} and PEPSI^{®}, non-carbonated soft drinks, juices and other fruit drinks, sports drinks such as GATORADE^{®}, coffee, teas, iced teas, cola, alcoholic beverages, such as beers, wines and liquors and KOOL-AID^{®}. Preferably, the consumable in which the mouthfeel is enhanced may contain a decreased level of the carbohydrate sweetener. Food products also include condiments such as herbs, spices and seasonings, flavor enhancers, such as monosodium glutamate. A food product also includes prepared packaged products, such as dietetic sweeteners, liquid sweeteners, granulated flavor mixes which upon reconstitution with water provide non-carbonated drinks, instant pudding mixes, instant coffee and tea, coffee whiteners, malted milk mixes, pet foods, livestock feed, tobacco and materials for baking applications, such as powdered baking mixes for the preparation of breads, cookies, cakes, pancakes, donuts and the like. Food products also include diet or low-calorie food and beverages containing little or no sucrose. Especially preferred food products are carbonated beverages.

The consumable can also be a pharmaceutical composition. Preferred compositions are pharmaceutical compositions containing a glucosylated rubusoside or a transglucosylated *R*. *suavissimus* extract and one or more pharmaceutically acceptable excipients. These pharmaceutical compositions can be used to formulate pharmaceutical drugs containing one or more active agents that exert a biological effect other than sweetness enhancement. The pharmaceutical composition preferably further includes one or more active agents that exert a biological effect. Such active agents include pharmaceutical and biological agents that have an activity other than taste enhancement. Such active agents are well known in the art (*e.g.,* The Physician's Desk Reference). Such compositions can be prepared according to procedures known in the art, for example, as described in Remington's Pharmaceutical Sciences, Mack Publishing Co., Easton, PA. In one embodiment, such an active agent includes bronchodilators, anorexiants, antihistamines, nutritional supplements, laxatives, analgesics, anesthetics, antacids, H₂-receptor antagonists, anticholinergics, antidiarrheals, demulcents, antitussives, antinauseants, antimicrobials, antibacterials, antifungals, antivirals, expectorants, anti-inflammatory agents, antipyretics and mixtures thereof. In one embodiment, the active agent is selected from the group consisting of antipyretics and analgesics, *e.g.*, ibuprofen, acetaminophen or aspirin; laxatives, *e.g.,* phenolphthalein dioctyl sodium sulfosuccinate; appetite depressants, *e.g.,* amphetamines, phenylpropanolamine, phenylpropanolamine hydrochloride or caffeine; antacidics, *e.g.,* calcium carbonate; antiasthmatics, *e.g.,* theophylline; antidiuretics, *e.g.,* diphenoxylate hydrochloride; agents active against flatulence, *e.g*., simethecon; migraine agents, *e.g.,* ergotaminetartrate; psychopharmacological agents, *e.g.,* haloperidol; spasmolytics or sedatives, *e.g.,* phenobarbitol; antihyperkinetics, *e.g.,* methyldopa or methylphenidate; tranquilizers, *e.g*., benzodiazepines, hydroxinmeprobramates or phenothiazines; antihistaminics, *e.g*., astemizol, chloropheniramine maleate, pyridamine maleate, doxlamine succinate, bromopheniramine maleate, phenyltoloxamine citrate, chlorocyclizine hydrochloride, pheniramine maleate and phenindamine tartrate; decongestants, *e.g*., phenylpropanolamine hydrochloride, phenylephrine hydrochloride, pseudoephedrine hydrochloride, pseudoephedrine sulfate, phenylpropanolamine bitartrate and ephedrine; beta-receptor blockers, *e.g*., propanolol; agents for alcohol withdrawal, *e.g.,* disulfuram; antitussives, *e.g.,* benzocaine, dextromethorphan, dextromethorphan hydrobromide, noscapine, carbetapentane citrate and chlophedianol hydrochloride; fluorine supplements, *e.g.,* sodium fluoride; local antibiotics, *e.g.,* tetracycline or cleocine; corticosteroid supplements, *e.g*., prednisone or prednisolone; agents against goiter formation, *e.g.,* colchicine or allopurinol; antiepileptics, *e.g.,* phenyloine sodium; agents against dehydration, *e.g.,* electrolyte supplements; antiseptics, *e.g.,* cetylpyridinium chloride; NSAIDs, *e.g*., acetaminophen, ibuprofen, naproxen or salts thereof; gastrointestinal active agents, *e.g.,* loperamide and famotidine; various alkaloids, *e.g.,* codeine phosphate, codeine sulfate or morphine; supplements for trace elements, *e.g*., sodium chloride, zinc chloride, calcium carbonate, magnesium oxide and other alkali metal salts and alkali earth metal salts; vitamins; ion-exchange resins, *e.g*., cholestyramine; cholesterol-depressant and lipid-lowering substances; antiarrhythmics, *e.g.,* N-acetylprocainamide; and expectorants, *e.g.,* guaifenesin. In some embodiments, the consumable is a dietary supplement or nutraceutical. Examples of such compositions having an undesirable taste include, but are not limited to, enteral nutrition products for treatment of nutritional deficit, trauma, surgery, Crohn's disease, renal disease, hypertension, obesity and the like, to promote athletic performance, muscle enhancement or general well-being or inborn errors of metabolism such as phenylketonuria. In particular, such compositions can contain one or more amino acids which have a bitter or metallic taste or aftertaste. Such amino acids include, but are not limited to, an essential amino acid such as L isomers of leucine, isoleucine, histidine, lysine, methionine, phenylalanine, threonine, tryptophan, tyrosine and valine. In a further embodiment, the consumable of the present invention is a dental hygienic composition, containing a carbohydrate sweetener and a glucosylated rubusoside or a transglucosylated *R. suavissimus* extract containing a glucosylated rubusoside. Dental hygienic compositions are known in the art and include, but are not necessarily limited to, toothpaste, mouthwash, plaque rinse, dental floss, dental pain relievers (such as ANBESOL™) and the like. In one embodiment, the dental hygienic composition includes one carbohydrate sweetener. In another embodiment, the dental hygienic composition includes more than one carbohydrate sweetener. In certain embodiments, the dental hygienic composition includes sucrose and corn syrup or sucrose and aspartame. In yet another embodiment, the consumable of the present invention is a cosmetic product containing a carbohydrate sweetener and a glucosylated rubusoside or a transglucosylated *R. suavissimus* extract containing a glucosylated rubusoside. For example, but not by way of limitation, the cosmetic product can be a face cream, lipstick, lip gloss and the like. Other suitable compositions of the invention include lip balm, such as CHAPSTICK^{®} or BURT'S BEESWAX^{®} Lip Balm.

As indicated, a glucosylated rubusoside or a transglucosylated *R. suavissimus* extract can be used in a consumable such as a flavoring to enhance mouthfeel, in particular sugary mouthfeel. In some embodiments, the flavoring and a glucosylated rubusoside or a transglucosylated *R*. *suavissimus* extract are used at a 1:1, 2:1, 3:1 or 4:1 ratio. Flavorings of use in this invention include, but are not limited to, Natural Sweet Flavor #2 (WO 2012/129451), stevioside, rebaudioside A, rebaudioside B, rebaudioside C, rebaudioside D, rebaudioside E, rebaudioside F, dulcoside A, dulcoside B, stevia, alpha-glucosyl stevia, fructosyl stevia, galactosyl stevia, beta-glucosyl stevia, siamenoside, mogrosidc IV, mogroside V, Luo Han Guo sweetener, monatin and its salts, glycyrrhizic acid and its salts (*e.g*., as found in MAGNASWEET), curculin, thaumatin, monellin, mabinlin, brazzein, hernandulcin, phyllodulcin, glycyphyllin, phloridzin, trilobtain, baiyunoside, osladin, polypodoside A, pterocaryoside A, pterocaryoside B, mukurozioside, phlomisoside I, periandrin I, abrusoside A, cyclocarioside I or a combination thereof. In certain embodiments, the flavoring is Natural Sweet Flavor #2 (also known as NSF-02), which contains glucosylated steviol glycosides and dextrin. In one embodiment, the invention provides a combination of the a glucosylated rubusoside or a transglucosylated *R*. *suavissimus* extract of the invention and a flavoring in a reduced amount in order to achieve the same level of mouthfeel when the flavoring is used alone in the traditional amount. In this respect, the amount of flavoring used can be reduced by at least about 10%, 20%, 30%, 40%, 50%, 60%, 70%, 80%, 90% or 95%, or from about 60% to about 99%, or alternatively from about 20% to about 50%.

The invention is described in greater detail by the following non-limiting examples.

### EXAMPLE I: Preparation of A Transglucosylated R. suavissimus Extract

### • A transglucosylated R. suavissimus extract with a rubusoside transglucosylation rate of about 35.1% (Preparation I)

*R. suavissimus* extract (25 g powder, containing ∼16.8 g rubusoside) (Hunan Changsha Yuanhang Biology Product Co., LTD, China) and maltodextrin DE 10 (25 g) were dissolved in NaHCO₃ water solution (0.05 M) (120 mL). The mixture was transferred to a jacketed reaction vessel and heated to and maintained at 55°C. Cyclodextrin gluconotransferase (EC 2.4.1.19; 1200 units) (Amano Enzyme Inc., Japan) was added to initiate the transglucosylation reaction. The reaction mixture was incubated at 57.5°C for about 1 hour with constant agitation. Additional cyclodextrin gluconotransferase (1200 units) was then added and the reaction mixture was incubated at 57.5°C for 1 more hour with constant agitation. At the end of incubation, the reaction mixture was heated to and maintained at 90°C for 15 minutes and subsequently cooled to room temperature. Glycerol (20 g) was added as a carrier. The resulting mixture was concentrated in a rotary evaporator to afford a solution of a transglucosylated *R*. *suavissimus* extract (82.2 g). Accordingly, *R. suavissimus* extract with a rubusoside glucosylation rate of ∼35.1% was provided.

### • A transglucosylated R. suavissimus extract with a rubusoside transglucosylation rate of about 60.9% (Preparation II)

*R. suavissimus* extract (50 g powder, containing ∼33.5 g rubusoside) (Hunan Changsha Yuanhang Biology Product Co., LTD, China) and maltodextrin DE 10 (25 g) were dissolved in acetate buffer (0.5 M, pH 6) (200 g). The mixture was transferred to a jacketed reaction vessel and heated to and maintained at 55°C. Cyclodextrin gluconotransferase (EC 2.4.1.19; 3600 units) (Amano Enzyme Inc., Japan) was added to initiate the transglucosylation reaction. The reaction mix was incubated at 55°C for about 24 hours with constant agitation. At the end of incubation, the reaction mixture was heated to and maintained at 90°C for about 15 minutes and subsequently cooled to room temperature. Glycerol (30 g) was then added as a carrier. The resulting mixture was concentrated in a rotary evaporator to afford a solution of a transglucosylated *R. suavissimus* extract (138 g). Accordingly, *R. suavissimus* extract with a rubusoside glucosylation rate of ∼60.9% was provided.

### • A transglucosylated R. suavissimus extract with a rubusoside transglucosylation rate of about 78.0% (Preparation III)

*R. suavissimus* extract (25 g powder, containing about 20.9 g of rubusoside) (Guilin Layn Natural Ingredients Corp., China) and maltodextrin DE 10 (50 g) were dissolved in acetate buffer (0.1 M, pH 6) (250 g). The mixture was transferred to a jacketed reaction vessel and heated to and maintained at 55°C. Cyclodextrin gluconotransferase (EC 2.4.1.19; 3000 units) (Amano Enzyme Inc., Japan) was added to initiate the transglucosylation reaction. The reaction mix was incubated at 55°C for about 24 hours with constant agitation. At the end of incubation, the reaction mixture was heated to and maintained at 90°C for about 15 minutes and subsequently cooled to room temperature. Glycerol (20 g) was then added as a carrier. The resulting mixture was concentrated in a rotary evaporator to afford a solution of a transglucosylated *R. suavissimus* extract (100.5 g). Accordingly, *R. suavissimus* extract with a rubusoside glucosylation rate of ∼78.0% was provided.

### EXAMPLE II: Mouthfeel Enhancement of A Transglucosylated R. suavissimus Extract Compared with Other Sweeteners

Isosweet solutions of sucrose (1.5%), rebaudioside A ("Reb-A") (30 ppm), sucralose (20 ppm) and rubusoside (45 ppm) were prepared in a sucrose base solution (4% in water). Additional solutions of the transglucosylated *R. suavissimus* extract prepared with different rubusoside transglucosylation rates including Preparation I, II and III (prepared as above in EXAMPLE I) were also prepared, wherein the total rubusoside concentrations were equalized to 45 ppm.

Sweetness and mouthfeel of the obtained solutions were evaluated using a score of 0 to 10, where 0 = none, 1 = barely detectable, 2 = weak, 4 = weak-moderate, 6 = moderate, 8 = moderate-strong and 10 = extremely strong. Averaged scores are reported in the following:

| **Sample** | **Mouthfeel** | **Sweetness** |
|---|---|---|
| Base Solution | 3 | 2 |
| Sucrose (1.5%) | 7 | 5 |
| Reb-A (30 ppm) | 3 | 5 |
| Sucralose (20 ppm) | 3 | 5 |
| Rubusoside (45 ppm) | 4 | 5 |
| Preparation I | 5 | 5 |
| Preparation II | 6 | 4 |
| Preparation III | 7 | 3 |

As shown in the above, the enhancement of mouthfeel exhibited by the transglucosylated *R*. *suavissimus* extract improved with higher glucosylation rates, while the intensity of sweetness showed a reversed trend. Thus, such mouthfeel enhancement is distinctly different and independent from sweetness enhancement. Accordingly, a transglucosylated *R. suavissimus* extract is unexpectedly and advantageously useful in enhancing the mouthfeel of a consumable.

### EXAMPLE III: Mouthfeel Enhancement of R. suavissimus Extract Transglucosylated at Different Levels

*R. suavissimus* extract was transglucosylated to different levels by adding glucose units, for example, one, two, three, four or five glucose units, to the rubusoside. A series of the transglucosylated *R. suavissimus* extract (Samples 1-4) were prepared. Solutions of the samples were then prepared in a sucrose base solution (4% in water) as described in EXAMPLE II. The total rubusoside concentrations in all solutions were equalized to 30 ppm. The sensory evaluation is reported in the following:

| **Sample** | **% of Glucosylated Rubusoside** | | | | | | | **Mouthfeel Enhancement** |
|---|---|---|---|---|---|---|---|---|
| | n=0 | n=1 | n=2 | n=3 | n=4 | n=5 | n≥6 | |
| 1 | 40.7 | 36.8 | 21.7 | 0.8 | nd | nd | nd | Minimal |
| 2 | 4.8 | 87.6 | 7.6 | nd | nd | nd | nd | Minimal |
| 3 | nd | 4.8 | 1.8 | 23.1 | 35 | 17 | nd | Some |
| 4 | nd | nd | 10.6 | 45.4 | 34.3 | 9.7 | nd | More |

| | | | | | | | | |
|---|---|---|---|---|---|---|---|---|
| n represents the number of glucose units that were added to rubusoside; and nd represents an amount that was very low and not detected. | | | | | | | | |

The intensity of sweetness remained similar among all samples. However, as shown in the above, only *R. suavissimus* extract transglucosylated with 3 or more glucose units (i.e., Samples 3 and 4) provided mouthfeel enhancement.

Accordingly, a transglucosylated *R. suavissimus* extract containing rubusoside with an addition of 3 or more glucose units is unexpectedly and advantageously useful in enhancing the mouthfeel of a consumable.

### EXAMPLE IV: Identification of Optimal Transglucosylation Levels of R. suavissimus Extract in Mouthfeel Enhancement

To further identify the optimal levels of transglucosylation, additional samples of transglucosylated *R. suavissimus* extract (Samples 5-8) were prepared and evaluated. The total rubusoside concentrations were all equalized to 30 ppm. The sensory evaluation is reported in the following:

| **Sample** | **% of Glucosylated Rubusoside** | | | | | | | | | **Mouthfeel Enhancement** |
|---|---|---|---|---|---|---|---|---|---|---|
| | n=0 | n=1 | n=2 | n=3 | n=4 | n=5 | n=6 | n=7 | n=8 | |
| 1 | 40.7 | 36.8 | 21.7 | 0.8 | nd | nd | nd | nd | nd | Minimal |
| 5 | nd | nd | nd | 33 | 57 | 10 | nd | nd | nd | Strongest*** |
| 6 | nd | nd | nd | nd | 25 | 75 | nd | nd | nd | Very Strong** |
| 7 | nd | nd | nd | nd | nd | 60 | 40 | nd | nd | Strong* |
| 8 | nd | nd | nd | nd | nd | nd | 7 | 4 | 89 | Strong* |

| | | | | | | | | | | |
|---|---|---|---|---|---|---|---|---|---|---|
| n and nd are defined as above; and *, ** and *** represent statistically significant differences. | | | | | | | | | | |

The intensity of sweetness remained similar among all samples. However, the mouthfeel enhancement provided by Sample 5 was statistically significantly greater than that provided by all other samples (P < 0.01); Sample 6 was statistically significantly stronger than Samples 1, 7 and 8 (P < 0.01); and both Samples 7 and 8 were statistically significantly stronger than Sample 1 (P < 0.01). However, no significant difference was observed between Sample 7 and Sample 8 (P > 0.05).

As indicated herein, *R. suavissimus* extract transglucosylated with 3, 4 and 5 glucose units provided the most mouthfeel enhancement. In particular, a 3 glucose unit addition was required to maximize the effect of mouthfeel enhancement. Accordingly, a transglucosylated *R*. *suavissimus* extract with an addition of 3, 4 and 5 glucose units is unexpectedly and advantageously useful in enhancing the mouthfeel of a consumable.

## Claims

1. A method of enhancing the mouthfeel of a consumable comprising the step of incorporating an olfactory effective amount of a glucosylated rubusoside or a transglucosylated *R. suavissimus* extract containing an olfactory effective amount of a glucosylated rubusoside.

2. A mouthfeel enhancing composition comprising an olfactory effective amount of a glucosylated rubusoside or a transglucosylated *R. suavissimus* extract containing an olfactory effective amount of a glucosylated rubusoside.

3. The method of claim 1, or the mouthfeel enhancing composition of claim 2, wherein the glucosylated rubusoside contains 3 or more glucose units.

4. The method of claim 1 or of claim 3, or the mouthfeel enhancing composition of claim 2 or of claim 3, wherein the glucosylated rubusoside contains 3 to 8 glucose units.

5. The method of claim 1 or of claim3 or of claim 4, or the mouthfeel enhancing composition of claim 2 or of claim 3 or of claim 4, wherein the glucosylated rubusoside contains a mixture of 3, 4 and 5 glucose units.

6. The method of claim 1, or of any preceding method claim, wherein the consumable is selected from the group consisting of a carbohydrate sweetener and an artificial sweetener.

7. The method of claim 6, wherein the carbohydrate sweetener is selected from the group consisting of sucrose, fructose, glucose, high fructose corn syrup, xylose, arabinose, rhamnose and a sugar alcohol.

8. The method of claim 7, wherein the sugar alcohol is selected from the group consisting of erythritol, xylitol, mannitol, sorbitol and inositol.

9. The method of claim 6 or of claim 7 or of claim 8, wherein the artificial sweetener is selected from the group consisting of aspartame, sucralose, neotame, acesulfame potassium, saccharin and a combination thereof.

10. The method of claim 1, or of any preceding method claim, wherein the consumable is selected from the group consisting of a food product, a flavoring, a pharmaceutical composition, a dietary supplement, a nutraceutical, a dental hygienic composition, a tabletop sweetener and a cosmetic product.

11. The method of claim 10, wherein the food product is a beverage.

12. The method of claim 10 or of claim 11, wherein the flavoring is selected from the group consisting of Natural Sweet Flavor #2, stevioside, rebaudioside A, rebaudioside B, rebaudioside C, rebaudioside D, rebaudioside E, rebaudioside F, dulcoside A, dulcoside B, stevia, alpha-glucosyl stevia, fructosyl stevia, galactosyl stevia, beta-glucosyl stevia, siamenoside, mogrosidc IV, mogroside V, Luo Han Guo sweetener, monatin and its salts, glycyrrhizic acid and its salts, curculin, thaumatin, monellin, mabinlin, brazzein, hernandulcin, phyllodulcin, glycyphyllin, phloridzin, trilobtain, baiyunoside, osladin, polypodoside A, pterocaryoside A, pterocaryoside B, mukurozioside, phlomisoside I, periandrin I, abrusoside A, cyclocarioside I and a combination thereof.

13. The method of claim 1, or of any preceding method claim, or the mouthfeel enhancing composition of claim 2, or of any preceding composition claim, wherein the olfactory effective amount is from about 10 ppb to about 750 ppm by weight.

14. The method of claim 1, or of any preceding method claim, or the mouthfeel enhancing composition of claim 2, or of any preceding composition claim, wherein the olfactory effective amount is from about 100 ppb to about 300 ppm by weight.

15. The method of claim 1, or of any preceding method claim, or the mouthfeel enhancing composition of claim 2, or of any preceding composition claim, wherein the olfactory effective amount is from about 1 to about 150 ppm by weight.
